**Europäisches Patentamt**

**European Patent Office**

**Office européen des brevets**

(19)

(11) Veröffentlichungsnummer : **0 504 593 B1**

(12) # EUROPÄISCHE PATENTSCHRIFT

(45) Veröffentlichungstag der Patentschrift :
**20.07.94 Patentblatt 94/29**

(51) Int. Cl.$^5$ : **B60G 7/02, B60G 11/10, B60G 11/46, B60G 9/00, B62D 17/00**

(21) Anmeldenummer : **92102562.3**

(22) Anmeldetag : **15.02.92**

(54) **Justiervorrichtung.**

(30) Priorität : **20.03.91 DE 4109108**

(43) Veröffentlichungstag der Anmeldung :
**23.09.92 Patentblatt 92/39**

(45) Bekanntmachung des Hinweises auf die
Patenterteilung :
**20.07.94 Patentblatt 94/29**

(84) Benannte Vertragsstaaten :
**DE ES FR GB IT NL**

(56) Entgegenhaltungen :
**EP-A- 0 296 445**
**EP-A- 0 306 046**
**DE-A- 3 100 701**
**DE-A- 3 329 350**

(56) Entgegenhaltungen :
**DE-U- 8 716 234**
**FR-A- 706 302**
**US-A- 4 412 690**
**US-E- 30 308**

(73) Patentinhaber : **Bergische Achsenfabrik Fr. Kotz & Söhne**
**Am Ohlerhammer**
**D-51674 Wiehl (DE)**

(72) Erfinder : **Kopplow, Hans Werner, Dipl.-Ing.**
**Lindehenweg 19**
**W-5223 Nümbrecht (DE)**

(74) Vertreter : **Stenger, Watzke & Ring**
**Patentanwälte**
**Kaiser-Friedrich-Ring 70**
**D-40547 Düsseldorf (DE)**

**Beschreibung**

Gegenstand der Erfindung ist eine Justiervorrichtung für Luft- oder Blattfederachsen gezogene Anhängerfahrzeuge mit einer an an vorderen Konsolen schwenkbar gelagerten Längslenkern befestigten Achse und an einem Fahrzeugrahmen abgestützten Luftfederbälgen oder Blattfedern, wobei jeder Längslenker mit einen Auge auf einem in der Konsole angeordneten Bolzen gelagert und über die Justiervorrichtung verstellbar ist, wobei die Justiervorrichtung in den Seitenwänden der Konsole befestigte, waagerechte Kulissen aufweist.

Luftfederachsen der vorstehend beschriebenen Gattung sind beispielsweise aus der US-Re 30 308 bekannt. Die Befestigung der Längslenker in den Kulissen der Konsolen erfolgt unter Zwischenlage äußerer, mit rohrförmigen Ansätzen in die Kulissen eingreifender Platten mittels auf die Enden der Bolzen aufgeschraubter Muttern. Wenn sich die Muttern im fahrbetrieb lösen, kann sich diese Justiervorrichtung verschieben.

Davon ausgehend liegt der Erfindung die **Aufgabe** zugrunde eine selbsthemmende Justiervorrichtung für die Spurlaufeinstellung einer Luft- oder Blattfederachse zu schaffen, die auch nur eine Achsverschiebung auf einer in Fahrtrichtung liegenden Koordinate bewirkt.

Als technische **Lösung** wird dafür eine Justiervorrichtung vorgeschlagen, die aus in den waagerechten Kulissen verschiebbar angeordneten, inneren Gleitsteinen mit je einer Bohrung für den Bolzen und an den Seitenwänden der Konsole befestigten, senkrechten Kulissen mit in diesen verschiebbar angeordneten äußeren Gleitsteinen mit je einem geneigten Führungsschlitz für den Bolzen bestehen.

Wenn bei einer erfindungsgemäß ausgebildeten Justiervorrichtung die äußeren Gleitsteine bei gelöstem Bolzen beispielsweise mit einem Hammer in der Höhe verstellt werden, dann verschieben sich gleichzeitig die inneren Gleitsteine mit dem in ihnen gelagerten Bolzen quer dazu. Auf diese Weise kann das Auge des Längslenkers zur Einstellung der Spur auf einer in Fahrtrichtung liegenden Koordinate verstellt werden. Die ineinander geschachtelten Gleitsteinen verhindern eine unbeabsichtigte Verstellung bei Zug oder Druck.

Bei einer praktischen Ausführungsform hat es sich als zweckmäßig erwiesen, die waagerechten und die senkrechten Kulissen an einem Formteil vorzusehen, welches in Fenstern in den Seitenwänden der Konsole angeordnet ist. Die inneren Gleitsteine werden zweckmäßig mit einem inneren Bund an der inneren Kulisse geführt und sind von einer an der Konsole befestigten Verschleißscheibe umgeben, damit sie sich frei bewegen können.

Die Neigung des Führungsschlitzes in den äußeren Gleitsteinen kann 65° bis 75° zur Waagerechten betragen, und zwar in Abhängigkeit von der Größe des Reibwertes zwischen den Gleitpartnern. Bei einem Reibwert von 0,36 beträgt die Neigung beispielsweise vorzugsweise 70°, weil dann Selbsthemmung bei Zug und Druck eintritt.

Natürlich kann die erfindungsgemäß ausgebildete Justiervorrichtung auch auf beiden Seiten einer Luftfederachse an den vorderen Konsolen vorgesehen werden. Im Normalfall reicht aber eine Justiervorrichtung für die Spureinstellung aus.

Weitere Einzelheiten und Vorteile ergeben sich aus der nachflogenden Beschreibung der zugehörigen Zeichnungen, in denen eine Luftfederachse mit einer bevorzugten Ausführungsform einer erfindungsgemäß ausgebildeten Justiervorrichtung dargestellt worden ist. In den Zeichnungen zeigen:

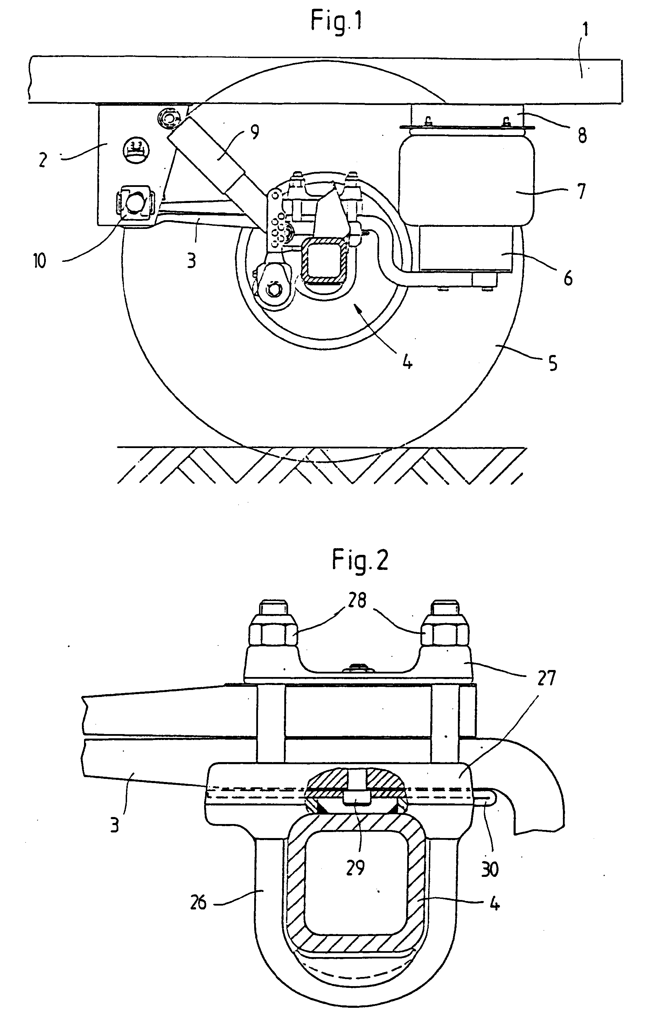

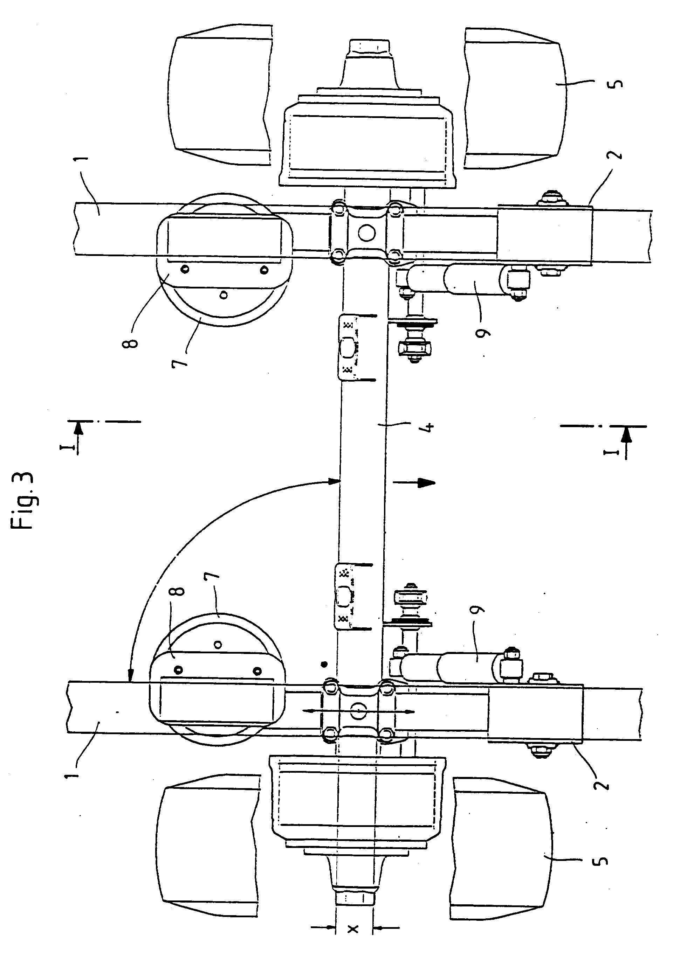

Fig. 1     eine Luftfederachse im normalen Fahrbetrieb entlang der Linie I-I in der Fig. 3 geschnitten in Seitenansicht;

Fig. 2     einen vergrößerten Ausschnitt aus Fig. 1 mit der Achseinbindung teilweise geschnitten in Seitenansicht;

Fig. 3     dieselbe Luftfederachse in Draufsicht;

Fig. 4     eine Justiervorrichtung in Seitenansicht;

Fig. 5     dieselbe Justiervorrichtung entlang der Linie V-V in Fig. 4 geschnitten in Draufsicht;

Fig. 6     dieselbe Justiervorrichtung entlang der Linie VI-VI in Fig. 4 geschnitten in Seitenansicht;

Fig. 7     eine schematisierte Justiervorrichtung in drei verschiedenen Stellungen in Seitenansicht;

Fig. 8     eine mechanische Blattfederachse in Seitenansicht;

Fig. 9     ein Verbundachsaggregat in Seitenansicht.

Unter einem Fahrzeugrahmen 1 sind zwei vordere Konsolen 2 befestigt. Am unteren Ende der Konsolen 2 sind Längslenker 3 für eine Achse 4 mit daran angeordneten Rädern 5 schwenkbar gelagert. Auf den rückwärtigen Enden der Längslenker 3 sind Töpfe 6 von Luftfederbälgen 7 befestigt, die sich mit ihren Deckeln 8 unter dem Fahrzeugrahmen 1 abstützen. Zwischen der Achse 4 und den vorderen Konsolen 2 sind Stoßdämpfer 9 befestigt.

Zur Spurlaufeinstellung der Achse 4 ist in einer der beiden vorderen Konsolen 2 eine Justiervorrichtung 10 angeordnet, die folgendermaßen aufgebaut ist:

Der Längslenker 3 ist mit einem Auge 11 und einer elastischen Einlage 12 auf einem Bolzen 13 schwenkbar gelagert, der die Konsole 2 durchdringt.

In Seitenwänden 14,15 der im Querschnitt U-förmig profilierten Konsole 2 sind in Fahrtrichtung verlaufende, waagerechte Kulissen 16 angeordnet. Der Bolzen 13 ist mit inneren Gleitsteinen 17 in den waagerechten Kulissen 16 verschiebbar gelagert. Um eine zuverlässige Führung des Bolzens 13 in den Kulissen 16 zu gewährleisten, liegen die Gleitsteine 17 den Kulissen 16 auf der Innenseite mit einem Bund 18 an. Um die Gleitsteine 17 herum sind auf der Innenseite der Seitenwände 14,15 der Konsole 2 mit Spiel Verschleißscheiben 19 befestigt.

Das Formteil, an dem die innenliegenden, waagerechten Kulissen 16 ausgebildet sind, bildet auf der Außenseite eine senkrechte Kulisse 20, in der ein äußerer Gleitstein 21 verschiebbar geführt ist, der einen geneigten Führungsschlitz 22 für den Bolzen 13 hat.

Die auf beiden Seiten der Konsole 2 ausgebildete Justiervorrichtung wird mit dem Bolzen 13 bzw. einer auf diesen aufgeschraubten Mutter 23 unter Zwischenlage einer ovalen Unterlegscheibe 24 zusammengehalten, welche den Führungsschlitz 22 abdeckt.

Der Führungsschlitz 22 in dem äußeren Gleitstein 21 ist unter einem spitzen Winkel gegen die Waagerechte geneigt, der unter Berücksichtigung des Reibwertes der Gleitpartner so gewählt wird, daß in der Justiervorrichtung Selbsthemmung eintritt.

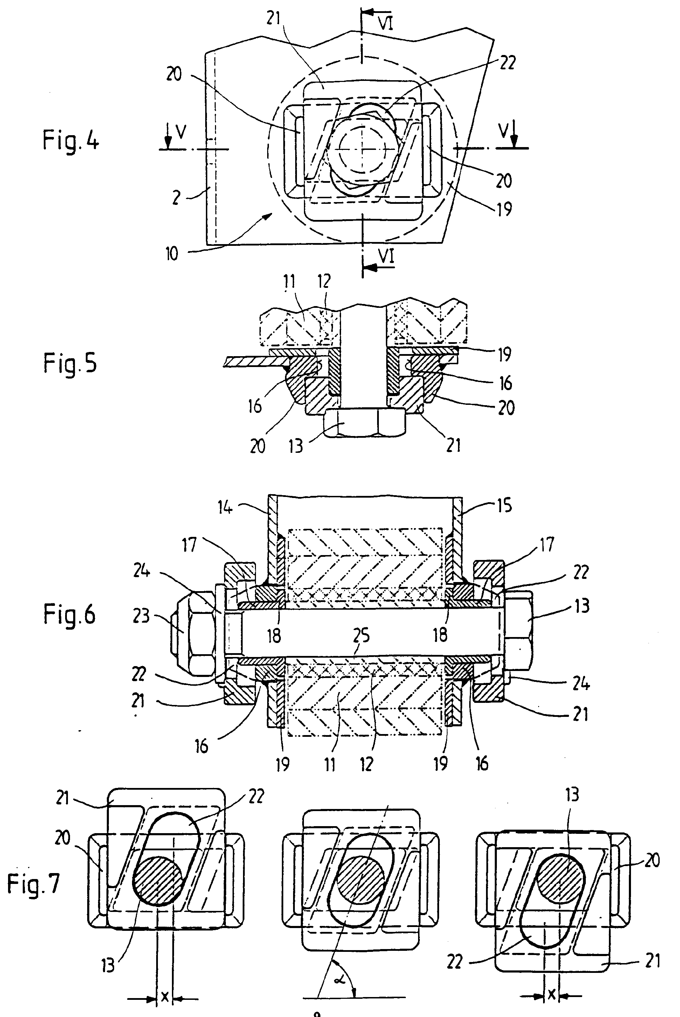

Bei einer senkrechten Bewegung der äußeren Gleitsteine 21 in den senkrechten Kulissen 20 aus der einen Endlage in die andere Endlage wird der Bolzen 13 um einen Betrag x in Fahrtrichtung verschoben, wie es in der Fig. 7 schematisch dargestellt worden ist. Dabei bewegen sich zwangsweise auch die inneren Gleitsteine 17 aus der einen Endlage in die andere Endlage.

Damit sich die inneren Gleitsteine 17 nicht in das Auge 11 hinein verlagern können, ist zwischen ihnen eine Distanzhülse 25 auf dem Bolzen 13 angeordnet.

Die zweilagig ausgebildeten Längslenker 3 sind mit Bügeln 26, oberen und unteren Platten 27 sowie Muttern 28 an der Achse 4 befestigt. Um eine winkelgenaue und verschiebefeste Einbindung der Achse 4 zu gewährleisten, ist ein die Platten 27 und den Längslenker 3 durchdringender Herzbolzen 29 mit einem am Ende ungebördelten Blech 30 verschiebefest an der Achseinbindung festgelegt.

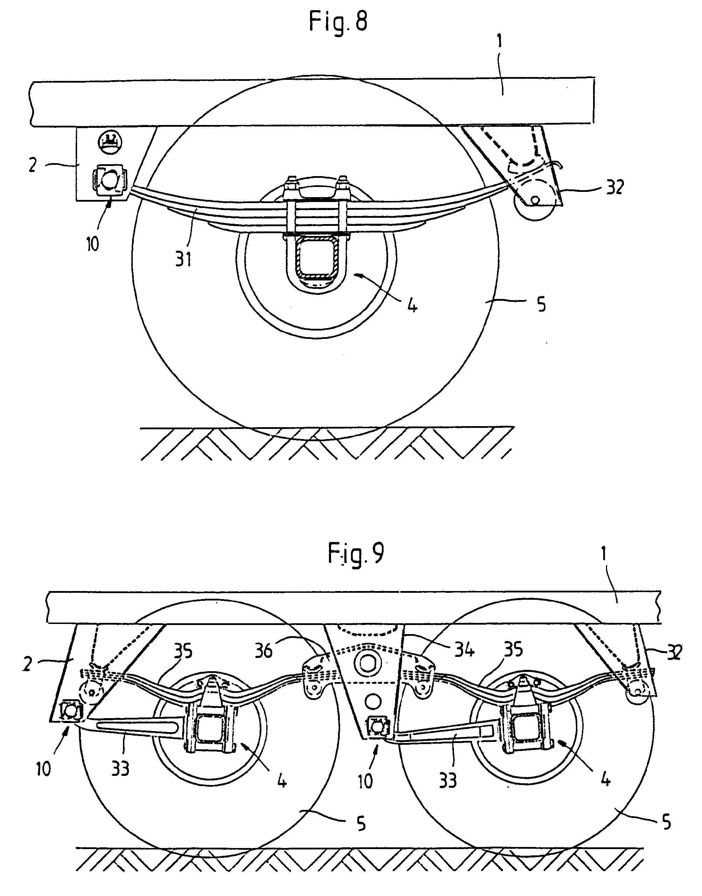

Wenn die Erfindung bei einer mechanischen Blattfederachse angewendet wird, wie es in Fig. 8 schematisch dargestellt worden ist, dann wird das vordere Federauge einer Blattfeder 31, an der die Achse 4 befestigt ist, unmittelbar auf dem Bolzen 13 der Justiervorrichtung 10 angeordnet. Das rückwärtige Ende der Blattfeder 31 muß für die Justierung beweglich sein und kann sich beispielsweise in einer hinteren Konsole 32 am Fahrzeugrahmen 1 abstützen.

Auch bei einem Verbundachsaggregat, wie es in der Fig. 9 schematisch dargestellt worden ist, kann die Justiervorrichtung angewendet werden. In diesem Falle werden Längslenker 33, an denen die Achsen 4 befestigt sind, mit einem vorderen Auge auf dem Bolzen der Justiervorrichtung 10 gelagert, die in der vorderen Konsole 2 und einer mittleren Konsole 34 angeordnet sind. Damit die Achsen 4 ausgerichtet werden können, müssen ihre Blattfedern 35 am vorderen und rückwärtigen Ende gleitend abgestützt sein. Das geschieht in der vorderen Konsole 2 und einer hinteren Konsole 32 sowie an einem in der mittleren Konsole 34 schwenkbar gelagerten Ausgleichsarm 36.

**Bezugszeichenliste**

1 Fahrzeugrahmen

2 Konsole (vordere)

3 Längslenker

4 Achse

5 Rad

6 Topf

7 Luftfederbalg

8 Deckel

9 Stoßdämpfer

10 Justiervorrichtung

11 Auge

12 Einlage

13 Bolzen

14 Seitenwand

15 Seitenwand

16 Kulisse (waagerecht)

17 Gleitstein (innerer)

18 Bund

19 Verschleißscheibe

20 Kulisse (senkrecht)

21 Gleitstein (äußerer)

22 Führungsschlitz

23 Mutter

24 Unterlegscheibe

25 Distanzhülse

26 Bügel

27 Platte

28 Mutter

29 Herzbolzen

30 Blech

31 Blattfeder

32 Konsole (hintere)

33 Längslenker

34 Konsole (mittlere)

35 Blattfeder

36 Ausgleichsarm

α Winkel

**Patentansprüche**

1. Justiervorrichtung für Luft- oder Blattfederachsen gezogener Anhängerfahrzeuge mit einer an an vorde-

4

ren Konsolen (2) schwenkbar gelagerten Längslenkern (3) befestigten Achse (4) und an einem Fahrzeugrahmen abgestützten Luftfederbälgen (7) oder Blattfedern (35), wobei jeder Längslenker (3) mit einem Auge (11) auf einem in der Konsole (2) angeordneten Bolzen (13) gelagert und über die Justiervorrichtung verstellbar ist, wobei die Justiervorrichtung in den Seitenwänden (14,15) der Konsole (2) befestigte, waagerechte Kulissen (16) aufweist,

**gekennzeichnet durch**

in den waagerechten Kulissen (16) verschiebbar angeordnete, innere Gleitsteine (17) mit je einer Bohrung für den Bolzen (13) und

an den Seitenwänden (14,15) der Konsole (2) befestigten senkrechten Kulissen (20) mit

in diesen verschiebbar angeordneten, äußeren Gleitsteinen (21) mit je einem geneigten Führungsschlitz (22) für den Bolzen (13).

2. Justiervorrichtung nach Anspruch 1, dadurch gekennzeichnet, daß die Gleitsteine (17,21) mit dem Bolzen (13) und einer darauf befestigten Mutter (23) in Eingriff mit ihren Kulissen (16,20) gehalten werden.

3. Justiervorrichtung nach Anspruch 1, dadurch gekennzeichnet, daß die Neigung des Führungsschlitzes (22) in den äußeren Gleitsteinen (21) 65° bis 75°, vorzugsweise 70° bei einem Reibwert von 0,36 beträgt.

4. Justiervorrichtung nach Anspruch 1, dadurch gekennzeichnet, daß die waagerechten und die senkrechten Kulissen (16,20) aus einem Formteil bestehen und in Fenster in den Seitenwänden (14,15) der Konsole (2) eingesetzt sind.

5. Justiervorrichtung nach Anspruch 1, dadurch gekennzeichnet, daß der innere Gleitstein (17) mit einem Bund (18) an der inneren Kulisse (16) geführt ist.

6. Justiervorrichtung nach den Ansprüchen 1 und 5, dadurch gekennzeichnet, daß der Bund (18) von einer an der Konsole (2) befestigten Verschleißscheibe (19) umgeben ist.

7. Justiervorrichtung nach Anspruch 1, gekennzeichnet durch die Anwendung einer mechanischen Blattfeder (35) als Längslenker, wobei deren vorderes Federauge (11) direkt auf dem in der Konsole (2) angeordneten Bolzen (13) gelagert ist und deren hinteres Ende gleitend am Fahrzeugrahmen (1) abgestützt ist.

## Claims

1. Adjusting device for air- or leaf-spring axles of towed trailer vehicles with an axle (4) attached to longitudinal links (3) pivotably mounted on front brackets (2) and with air-spring bellows (7) or leaf springs (35) supported on a vehicle chassis, each longitudinal link (3) being mounted by means of an eye (11) on a bolt (13) arranged in the bracket (2) and being adjustable by means of the adjusting device, the adjusting device having horizontal slotted guides (16) fixed in the side walls (14, 15) of the bracket (2), characterized by inner sliding blocks (17) arranged displaceably in the horizontal slotted guides (16) and each having a hole for the bolt (13) and by vertical slotted guides (20) fixed to the side walls (14, 15) of the bracket (2) and having outer sliding blocks (21) arranged displaceably in the said slotted guides (20) and each having a sloping guide slot (22) for the bolt (13).

2. Adjusting device according to Claim 1, characterized in that the sliding blocks (17, 21) are held in engagement with their slotted guides (16, 20) by means of the bolt (13) and a nut (23) secured on the latter.

3. Adjusting device according to Claim 1, characterized in that the slope of the guide slot (22) in the outer sliding blocks (21) is from 65° to 75°, preferably 70°, with a friction coefficient of 0.36.

4. Adjusting device according to Claim 1, characterized in that the horizontal and vertical slotted guides (16, 20) consist of a shaped part and are inserted into apertures in the side walls (14, 15) of the bracket (2).

5. Adjusting device according to Claim 1, characterized in that the inner sliding block (17) is guided on the inner slotted guide (16) by means of a collar (18).

6. Adjusting device according to Claims 1 and 5, characterized in that the collar (18) is surrounded by a wearing washer (19) fixed to the bracket (2).

7. Adjusting device according to Claim 1, characterized by the use of a mechanical leaf spring (35) as a longitudinal link, its forward spring eye (11) being mounted directly on the bolt (13) arranged in the bracket (2) and its rearward end being supported in sliding fashion on the vehicle chassis (1).

## Revendications

1. Dispositif d'ajustage pour des essieux à coussins d'air ou à ressorts à lames de remorques tractées, ledit dispositif comprenant un essieu (4), qui est fixé à des bras oscillants longitudinaux (3) montés de manière pivotante sur des consoles avant (2), et comprenant des soufflets (7) formant coussins d'air ou des ressorts à lames (35) qui prennent appui sur le châssis du véhicule, chaque bras oscillant longitudinal (3) étant monté, par l'intermédiaire d'un oeil (11), sur un goujon (13) disposé dans la console (2) et pouvant être ajusté au moyen du dispositif d'ajustage, le dispositif d'ajustage comportant des coulisses horizontales (16) fixées dans les parois latérales (14, 15) de la console (2), caractérisé en ce qu'il comprend des coulisseaux intérieurs (17), qui peuvent se déplacer dans les coulisses horizontales (10) et qui comportent chacun un perçage pour le goujon (13), et des coulisses verticales (20) qui sont fixées aux parois latérales (14, 15) de la console (2) et qui comportent des coulisseaux extérieurs (21) qui peuvent se déplacer dans lesdites coulisses verticales et qui comportent chacun une fente de guidage inclinée (22) pour le goujon (13).

2. Dispositif d'ajustage selon la revendication 1, caractérisé en ce que les coulisseaux (17, 21) sont maintenus en prise avec leurs coulisses (16, 20) au moyen du goujon (13) et d'un écrou (23) fixé sur ce dernier.

3. Dispositif d'ajustage selon la revendication 1, caractérisé en ce que l'inclinaison de la fente de guidage (22) pratiquée dans les coulisseaux extérieurs (21) est de 65° à 75°, de préférence de 70° pour un coefficient de friction de 0,36.

4. Dispositif d'ajustage selon la revendication 1, caractérisé en ce que les coulisses horizontale et verticale (16, 20) sont réalisées dans une pièce moulée et logées dans des fenêtres pratiquées dans les parois latérales (14, 15) de la console (2).

5. Dispositif d'ajustage selon la revendication 1, caractérisé en ce que le coulisseau intérieur (17) est guidé par un collet (8) contre la coulisse intérieure (16).

6. Dispositif d'ajustage selon les revendications 1 et 5, caractérisé en ce que le collet (18) est entouré d'une rondelle d'usure (19) fixée à la console (2).

7. Dispositif d'ajustage selon la revendication 1, caractérisé par l'emploi d'un ressort à lames mécanique (35) faisant fonction de bras oscillant longitudinal, l'oeil de ressort avant (11) dudit ressort à lames (35) étant monté directement sur le goujon (13) disposé dans la console (2), et son extrémité arrière prenant appui, avec possibilité de glissement, sur le châssis (1) du véhicule.

Fig.1

Fig.2

Fig.3

Fig. 4

Fig. 5

Fig. 6

Fig. 7

9

## Fig. 8

## Fig. 9